(19) **Europäisches Patentamt**

**European Patent Office**

**Office européen des brevets**

(11) Veröffentlichungsnummer: **0 141 870**
**B1**

(12) **EUROPÄISCHE PATENTSCHRIFT**

(45) Veröffentlichungstag der Patentschrift:
**22.06.88**

(21) Anmeldenummer: **83111362.6**

(22) Anmeldetag: **14.11.83**

(51) Int. Cl.⁴: **G 01 C 15/00,** H 01 S 3/02,
G 01 B 11/27

(54) Kanalbaulaser.

(43) Veröffentlichungstag der Anmeldung:
**22.05.85 Patentblatt 85/21**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**CH - A - 577 162**
**US - A - 3 242 340**
**US - A - 4 333 242**

(73) Patentinhaber: **Spectra-Physics AG, Schweizergasse 39,
CH-4054 Basel (CH)**

(72) Erfinder: **Wächter, Peter Paul, CH-8173 Neerach (CH)**

(74) Vertreter: **Schaafhausen, Ludwig Richard, Dipl.-Phys. et
al, KEIL & SCHAAFHAUSEN Patentanwälte
Eysseneckstrasse 31, D-6000 Frankfurt am Main 1 (DE)**

## Beschreibung

Die Erfindung betrifft einen Kanalbaulaser mit einem in einem im wesentlichen rohrförmigen Aussengehäuse angeordneten Laserrohr, wobei der Laserstrahl über eine Fernsteuerung sowohl horizontal (Flucht) als auch vertikal (Gefälle) verstellbar ist und das Gefälle des Laserstrahls über einen Neigungsmesser einstellbar ist, wobei der Kanalbaulaser durch eine elektronische Selbstnivellierung unter Beibehaltung des eingestellten Gefälles des Laserstrahls in der Waage gehalten wird.

Derartige Kanalbaulaser sind bekannt (CH-A-577 162). Als Laser wird üblicherweise ein Helium/Neon-Laser verwendet, der eine Arbeitsspannung von 12–14 V hat. Als Energieversorgung dienen eine oder mehrere wiederaufladbare Batterien, die in einer getrennten Energie-Box aufbewahrt werden.

Zur Durchführung einer Messung ist neben dem eigentlichen Kanalbaulaser noch eine Messblende erforderlich, deren Zielmarke sich in einer Höhe befindet, die der Strahlarbeitshöhe des Laserstrahles entspricht. Während der Messung ist die Flucht und das Gefälle des Kanalbaulasers einzustellen. Hierfür ist eine Fernsteuerung in Form einer Kabeltrommel vorgesehen, deren Kabel über eine Steckverbindung mit dem Kanalbaulaser verbunden ist und an der mehrere Bedienungsknöpfe vorgesehen sind.

Mit der in der Kabeltrommel vorgesehenen Fernsteuerung kann einerseits das Gefälle des Laserstrahles festgelegt und andererseits das Laserrohr horizontal und vertikal verstellt werden, so dass der Laserstrahl auf die Zielmarke der Messblende ausgerichtet werden kann.

Die Energieversorgung für den Laser liefert gleichzeitig den Strom für die Fernsteuerung, wozu je nach räumlichen Gegebenheiten entweder die oben erwähnte Energie-Box mit einer oder mehreren wiederaufladbaren Batterien oder ein in einem getrennten Kasten angeordnetes stabilisiertes Netzgerät verwendet werden kann.

Wenn auch die Fernsteuerung des Kanalbaulasers mittels einer Kabeltrommel, dessen Kabel gleichzeitig die Stromversorgung für den Laser herstellt, gegenüber früheren Kanalbaulasern bereits den Vorteil hatte, dass das Hinabsteigen in einen Kanal häufig überflüssig wurde oder aber auch aus einem Schacht heraus die Flucht eingestellt werden konnte, so bringt die Verwendung der Kabeltrommel und der dazugehörigen Energie-Box, in der üblicherweise eine oder mehrere Standardbatterien bis 50 Ah eingesetzt sind, erhebliche Nachteile mit sich. So ist einerseits der Bewegungsradius des Bedieners des bekannten Kanalbaulasers durch die Länge des Kabels beschränkt. Zur Gewährleistung einer sicheren Verbindung mit dem Kanalbaulaser muss die Steckverbindung zwischen dem Kanalbaulaser und der Kabeltrommel äusserst widerstandsfähig und absolut wasserdicht ausgebildet sein, da sie auch unter schwierigsten Bedingungen, wie sie beim Verlegen von Rohren gegeben sind, gewährleistet sein muss. Aber selbst die aufwendigsten Herstellungsverfahren können nicht verhindern, dass bei der Herstellung der Steckverbindung vor Ort Verunreinigungen zwischen die Steckerteile gelangen können, wodurch die Verbindung beeinträchtigt werden kann. Schliesslich kann auch das Kabel selbst beschädigt werden, was insbesondere bei längeren Kabeln leicht der Fall ist.

Die bekannten Kanalbaulaser haben darüber hinaus den Nachteil, dass von der Bedienungsperson nicht nur die relativ schwere Kabeltrommel getragen werden muss, sondern auch noch die Energieversorgung in Form der Energie-Box mit bspw. einer 12 V-Batterie, wie sie von Kraftfahrzeugen bekannt ist.

Aufgabe der vorliegenden Erfindung ist es daher, einen Kanalbaulaser der eingangs genannten Art zu schaffen, der gegenüber den bekannten Kanalbaulasern einfacher zu handhaben, leichter und betriebssicherer ist.

Diese Aufgabe wird erfindungsgemäss dadurch gelöst, dass in Achsrichtung des Laserrohres eine sich über die Länge des Gehäuses erstreckende Montageplatte vorgesehen ist, die in der Mittellängsebene des im wesentlichen hohlzylindrisch ausgebildeten Gehäuses angeordnet ist und die eigentliche Laseranordnung trägt, dass die Montageplatte im wesentlichen den oberen Abschluss eines wannenförmigen Gehäuseteils bildet, in dem die Stromversorgung für den Laser und die Fernsteuerung, insbesondere in Form von einer oder mehreren wiederaufladbaren Batterien angeordnet ist, und dass die Fernsteuerung eine drahtlose Infrarot-Fernsteuerung ist.

Damit kann die bekannte Kabeltrommel entfallen und ausserdem wird keine externe Energieversorgung mehr benötigt. Die Fernsteuerung des Kabelbaulasers erfolgt nur noch mittels eines kleinen Handgerätes, das der Benutzer des Kabelbaulasers ständig mit sich tragen kann. Mit der erfindungsgemässen Montageplatte lässt sich der gesamte Laseraufbau ausserhalb des Gehäuses montieren, wodurch sowohl die Herstellung als auch die Wartung des Kabelbaulasers sehr vereinfacht wird. Durch die besondere Anordnung kann die Montageplatte grösstmöglich ausgebildet sein. Der eigentlichen Laseranordnung steht damit die gesamte obere Hälfte des Gehäuseinneren an Platz zur Verfügung. Dadurch, dass die wiederaufladbaren Batterien von der Montageplatte in dem wannenförmigen Gehäuseteil innerhalb des Kanalbaulasers von der eigentlichen Laseranordnung getrennt sind, lassen sie sich einfach einsetzen bspw. austauschen.

Besondere Vorteile ergeben sich aufgrund der Verwendung einer Infrarot-Fernsteuerung. Deren Reichweite kann selbst für den Fall, dass nicht mit einem durch eine Optik fokussierten Strahl gearbeitet wird, sehr gross sein. So können bei einer elektrischen Pulsleistung von 500 W Reichweiten von 150 m sicher erreicht werden. Dadurch, dass der Infrarotstrahl nur einen kleinen Winkel überstreicht, können mehrere Rohre gleichzeitig verlegt werden, ohne dass einer der Kanalbaulaser von dem Sender des anderen Kanalbaulasers gestört wird. Dieses wäre bei einer Fernsteuerung mittels Funksteuerung nicht möglich. Eine Funkfernsteuerung lässt sich aber auch aus sicherheitstechnischen Gründen wegen der Gefahr von Funkenschlag nicht verwenden und ausserdem ist bei dieser keine Sichtverbindung gegeben. Darüber hinaus sind Funkfernsteuerungen gegenüber der erfindungsgemäss verwendeten Infrarotsteuerung wesentlich teurer. Schliesslich würden die bekannten Funkfernsteuerungen auch den Funkverkehr der Baufahrzeuge stören.

Aus der US-A-4 333 242 ist ein Kanalbaulaser bekannt, der eine sich über die Länge des Gehäuses erstreckende Montageplatte aufweist. Diese ist aber im Bodenbereich des Lasergehäuses angeordnet, so dass sie keine Anregung derart gibt, die Montageplatte gleichzeitig als Trennwand für ein in dem Gehäuse vorgesehenes «Batteriefach» vorzusehen, wobei die Batterien so leistungsstark sind, dass die sowohl den Laser als auch die Fernsteuerung mit Energie versehen.

Eine weitere vorteilhafte Ausgestaltung der Erfindung sieht vor, dass die Seitenverstellung der Laserröhre über einen Exzenterantrieb kontinuierlich erfolgt. In gleicher Weise kann auch die Höhenverstellung der Laserröhre über einen Exzenterantrieb kontinuierlich erfolgen. Gegenüber den auf Endanschlag arbeitenden Verstellungen haben die mittels eines Exzenters kontinuierlich arbeitenden Verstellungen den Vorteil, dass von jeder Lage aus eine Verstellung in jeder Richtung sofort und damit schnell erfolgen kann.

In Weiterbildung dieses Erfindungsgedankens ist vorgesehen, dass im Bereich des Angriffspunktes des Exzenters eine Spiralfeder um die Laserröhre gelegt ist, deren freien Enden an der Montageplatte befestigt sind. Damit wird die Laserröhre auf einfachste Weise immer wieder in ihre Ausgangslage zurückgeführt.

Eine besonders robuste und zuverlässig arbeitende Gefälleanzeige besteht aus mindestens einem mechanischen Zählwerk, das über eine starre Verbindung mit einem Spindelantrieb eines Neigungsmessers verbunden ist. Gegenüber digitalen Zählwerken hat das mit einem Neigungsmesser starr verbundene mechanische Zählwerk den Vorteil, dass es eine direkte Übertragung einer Zähleränderung unmittelbar nachvollzieht und gewährleistet damit stets eine sichere Einstellung des Neigungsmessers.

Für eine einfache elektronische Selbstnivellierung ist der Neigungsmesser vorteilhafterweise als elektronisch abtastbare Wasserlibelle ausgebildet.

Weitere Merkmale, Vorteile und Anwendungsmöglichkeiten der Erfindung ergeben sich aus der nachfolgenden Beschreibung eines Ausführungsbeispieles, das in der Zeichnung dargestellt ist.

Es zeigen:

Fig. 1 in vereinfachter Darstellung eine perspektivische Ansicht eines erfindungsgemässen Kanalbaulasers ohne Aussengehäuse und ohne darin vorgesehener Leiterplatte und

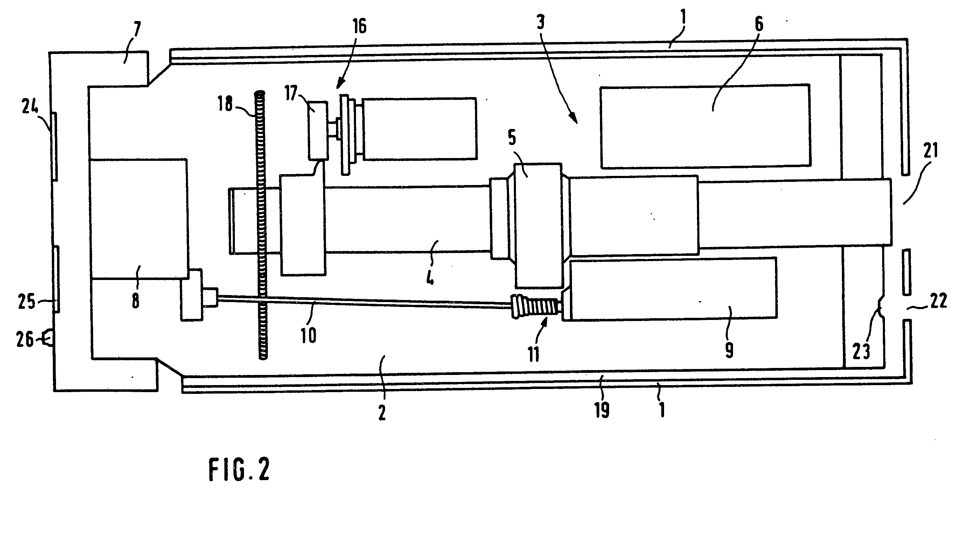

Fig. 2 eine Ansicht von oben auf den in Fig. 1 gezeigten Kanalbaulaser.

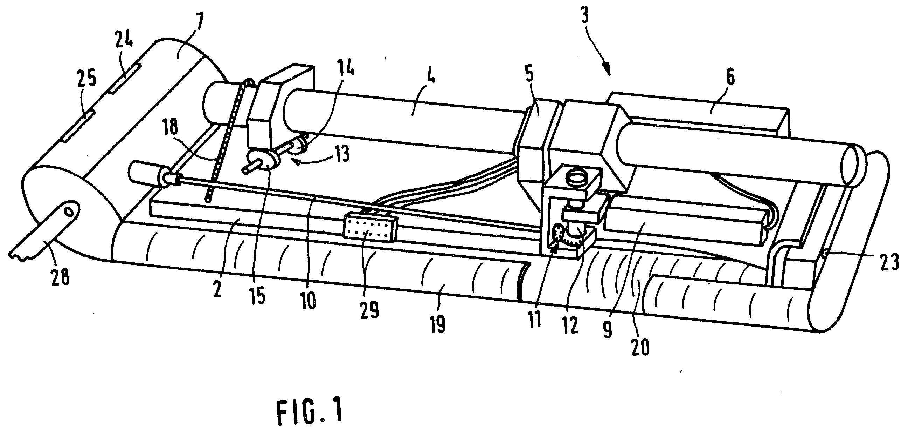

Der Kanalbaulaser besteht aus einem (in Fig. 1 nicht dargestellten) Aussengehäuse 1, in dem eine Montageplatte 2 eingeschoben ist, die eine Laseranordnung 3 trägt.

Die Laseranordnung 3 besteht aus einer Laserröhre 4 und ist im Schwerpunkt des Gehäuses in einem Kardanlager 5 gehaltert. Zur Spannungsversorgung des Lasers ist ein Hochspannungsteil 6 auf der Montageplatte 2 angeordnet.

Zur Einstellung des Gefälles des Laserstrahles ist am hinteren Ende des Kanalbaulasers in einem Gehäuse 7 ein Zählwerk 8 vorgesehen, das mechanisch mit einem Neigungsmesser 9 verbunden ist. Die Verbindung erfolgt über eine Welle 10, ein Untersetzungs-Zahnradgetriebe 11 und eine Spindel 12, die mit dem als Wasserlibelle 9 ausgebildeten Neigungsmesser in Eingriff tritt.

Die Wasserlibelle 9 wird elektronisch abgetastet und die Messwerte werden zur Selbstnivellierung des Kanalbaulasers verwendet, was bedeutet, dass der Kanalbaulaser unter Beibehaltung des eingestellten Gefälles seines Laserstrahles stets in der Waage gehalten wird. Dieses geschieht mittels eines Exzenterantriebes 13. Dieser besteht aus zwei Exzentern 14 und 15, die unterhalb an der Laserröhre 4 angreifen und diese kontinuierlich in der Höhe verstellen.

Zur seitlichen Verstellung der Laserröhre 4 ist ebenfalls ein Exzenterantrieb 16 vorgesehen, dessen Exzenter 17 seitlich an der Laserröhre 4 angreift. Die Exzenter 14, 15 und 17 greifen annähernd im gleichen Abschnitt an der Laserröhre 4 an. Die Rückstellung der Laserröhre 4 erfolgt in einfacher Weise durch eine Spiralfeder 18, die um die Laserröhre 4 gelegt ist und deren freien Enden in den seitlichen Randbereichen an der Montageplatte 2 befestigt sind.

Die Montageplatte 2 bildet den oberen Abschluss eines wannenförmigen Gehäuseteils 19. Die Form des wannenförmigen Gehäuseteils 19 entspricht der Form des Aussengehäuses 1, so dass das in das rohrförmige Aussengehäuse 1 eingeschobene wannenförmige Gehäuseteil 19 formschlüssig in dem Aussengehäuse 1 anliegt.

Die Montageplatte 2 ist in der Mittellängsebene des im wesentlichen hohlzylindrisch ausgebildeten Gehäuses 1 angeordnet. In der oberen Hälfte des Gehäuseinnenraumes ist die Laseranordnung 3 angeordnet, während die untere Hälfte für die Stromversorgung des Kanalbaulasers vorgesehen ist.

Als Stromversorgung dienen wiederaufladbare Batterien 20, die zweckmässigerweise länglich sind, da sich so der zur Verfügung stehende Platz am besten ausnutzen lässt. Die Batterien 20 lassen sich leicht über die Stirnseite des Kanalbaulasers einsetzen und bei Bedarf auswechseln.

An der Stirnseite des Kanalbaulasers ist im Aussengehäuse 1 im Bereich der Austrittsöffnung 21 für den Laserstrahl eine zweite Öffnung 22 für den Infrarotstrahl des in einem (nicht dargestellten) Handgerät vorgesehenen Senders vorgesehen, der auf einen Infrarot-Sensor 23 in dem Gehäuse des Kanalbaulasers trifft.

Am entgegengesetzten Ende des Kanalbaulasers sind in dem Gehäuse 7 zwei Sichtfenster 24 und 25 ausgebildet, in denen man das in dem Zählwerk 8 eingestellte Gefälle der Laserröhre 4 ablesen kann. Das eine der Sichtfenster 24 bzw. 25 zeigt die eingestellte Neigung und das andere die eingestellte Steigung der Laserröhre.

Am Gehäuse 7 ist ausserdem ein zusätzlicher externer Anschluss 26 vorgesehen, mit dem der Kanalbaulaser auch in herkömmlicher Weise mittels einer Kabelverbindung ferngesteuert werden kann, falls die Infrarot-Fernbedienung defekt oder aus irgendeinem Grunde nicht einsetzbar ist.

Schliesslich sind an dem Gehäuse 7 seitliche Abstützungen 28 vorgesehen, die drehbar an dem Gehäuse befestigt sind und den Kanalbaulaser an einem Umkippen hindern.

An der Montageplatte 2 ist ausserdem noch ein Anschluss 29 für eine (nicht dargestellte) Leiterplatte vorgesehen, die senkrecht zur Montageplatte 2 in dem Gehäuse 1 angeordnet ist und sich im wesentlichen über die gesamte Länge des wannenförmigen Gehäuseteils 19 erstreckt. Das wannenförmige Gehäuseteil 19 bildet dabei mit der die Laseranordnung 3 tragenden Montageplatte 2 und der daran befestigten Leiterplatte eine bauliche Einheit, die in das rohrförmige Aussengehäuse 1 formschlüssig eingeschoben wird. Das Gehäuse 1 lässt sich damit auf sehr einfache Weise äusserst widerstandsfähig und absolut wasserdicht ausbilden, so dass der Kanalbaulaser auch unter schwierigsten Bedingungen jederzeit einsatzbereit ist.

Die grosse elektrische Leistung des Senders der Infrarotsteuerung ermöglicht nicht nur ein bequemes Arbeiten auch in grosser Entfernung von dem Kanalbaulaser, sondern gewährleistet auch eine grosse Betriebssicherheit des Systems. Die Arbeitsweise und die Bedienung der Fernsteuerung erfolgt dabei in ähnlicher Weise, wie dies bei den bekannten Kanalbaulasern der Fall ist. Dadurch, dass die Kabeltrommel und die externe Energieversorgung mittels einer oder mehreren wiederaufladbaren Batterien, wie sie von Kraftfahrzeugen bekannt sind, weggefallen sind kann das Gewicht des Kanalbaulasers gegenüber den bekannten Kanalbaulasern um über die Hälfte verringert werden.

Bezugszeichenliste:
1　Aussengehäuse
2　Montageplatte
3　Laseranordnung
4　Laserröhre
5　Kardanlager
6　Hochspannungsteil
7　Gehäuse für 8
8　Zählwerk
9　Neigungsmesser/Wasserlibelle
10　Welle
11　Zahnradgetriebe
12　Spindel
13　Exzenterantrieb (Gefälle)

14　Exzenter zu 13
15　Exzenter zu 13
16　Exzenterantrieb (Flucht)
17　Exzenter zu 16
18　Spiralfeder
19　wannenförmiges Gehäuseteil
20　Batterien
21　Austrittsöffnung in 1 für den Laserstrahl
22　Öffnung in 1 für den Infrarotstrahl
23　Infrarot-Sensor
24　Sichtfenster
25　Sichtfenster
26　Anschluss
28　seitliche Abstützung
29　Anschluss für Leiterplatte

**Patentansprüche**

1. Kanalbaulaser mit einem in einem im wesentlichen rohrförmigen Aussengehäuse (1) angeordneten Laserrohr (4), wobei der Laserstrahl über eine Fernsteuerung sowohl horizontal (Fluchtverstellung) als auch vertikal (Gefälleverstellung) verstellbar ist und das Gefälle des Laserstrahls über einen Neigungsmesser (9) einstellbar ist, wobei der Kanalbaulaser durch eine elektronische Selbstnivellierung unter Beibehaltung des eingestellten Gefälles des Laserstrahls in der Waage gehalten wird, dadurch gekennzeichnet, dass in Achsrichtung des Laserrohres (4) eine sich über die Länge des Gehäuses (1) erstreckende Montageplatte (2) vorgesehen ist, die in der Mittellängsebene des im wesentlichen hohlzylindrisch ausgebildeten Gehäuses (1) angeordnet ist und die eigentliche Laseranordnung (3) trägt, dass die Montageplatte (2) im wesentlichen den oberen Abschluss eines wannenförmigen Gehäuseteils (19) bildet, in dem die Stromversorgung für den Laser (3, 4) und die Fernsteuerung, insbesondere in Form von einer oder mehreren wiederaufladbaren Batterien (20), angeordnet ist, und dass die Fernsteuerung eine drahtlose Infrarot-Fernsteuerung ist.

2. Kanalbaulaser nach Anspruch 1, dadurch gekennzeichnet, dass das wannenförmige Gehäuseteil (19) mit der die Laseranordnung (3) tragenden Montageplatte (2) eine bauliche Einheit bildet, die in das im wesentlichen rohrförmige Aussengehäuse (1) formschlüssig einschiebbar ist.

3. Kanalbaulaser nach Anspruch 2, dadurch gekennzeichnet, dass die Seitenverstellung der Laserröhre (4) über einen Exzenterantrieb (16) und die Höhenverstellung der Laserröhre (4) über einen weiteren Exzenterantrieb (13) kontinuierlich erfolgen.

4. Kanalbaulaser nach Anspruch 3, dadurch gekennzeichnet, dass im Bereich des Angriffspunktes eines Exzenters (14, 15; 17) eine Spiralfeder (18) um die Laserröhre (4) gelegt ist, deren freie Enden an der Montageplatte (2) befestigt sind.

5. Kanalbaulaser nach Anspruch 1, dadurch gekennzeichnet, dass als Gefälleanzeige mindestens ein mechanisches Zählwerk (8) vorgesehen ist, das über eine starre Verbindung (10, 11) mit einem Spindelantrieb (12) des Neigungsmessers (9) verbunden ist.

6. Kanalbaulaser nach Anspruch 5, dadurch gekennzeichnet, dass der Neigungsmesser eine elektronisch abtastbare Wasserlibelle (9) ist.

## Revendications

1. Laser pour la construction de canaux qui comporte un tube laser (4) placé dans une enveloppe extérieure (1) de forme essentiellement tubulaire, le rayon laser pouvant être déplacé, par l'intermédiaire d'un dispositif de télécommande, aussi bien dans le sens horizontal, par modification d'alignement, que dans le sens vertical, par modification de la pente, et la pente du rayon laser pouvant être réglée par l'intermédiaire d'un inclinomètre (9), le laser pour la construction de canaux étant maintenu en équilibre par un dispositif automatique électronique de maintien à niveau conservant la valeur de réglage de la pente du rayon laser, caractérisé en ce que le dispositif comporte, dans la direction de l'axe du tube laser (4), une plaque de montage (2) qui s'étend sur toute la longueur de l'enveloppe (1), est placée dans le plan longitudinal médian de l'enveloppe (1), essentiellement constituée par un cylindre creux, et porte le dispositif laser proprement dit (3), en ce que la plaque de montage (2) constitue essentiellement la pièce de fermeture supérieure d'une partie d'enveloppe (19) en forme de cuve dans laquelle sont placés le dispositif d'alimentation en courant du laser (3, 4) et le dispositif de télécommande, constitué notamment par une ou plusieurs batteries (20) susceptibles d'être rechargées et en ce que le dispositif de télécommande est un dispositif de télécommande à infrarouge sans fil.

2. Laser pour la construction de canaux selon la revendication 1, caractérisé en ce que la partie d'enveloppe (19) en forme de cuve constitue, avec la plaque de montage (2) qui porte le dispositif laser (3), une unité de montage qui peut être insérée de par sa forme correspondante dans l'enveloppe extérieure (1) de forme essentiellement tubulaire.

3. Laser pour la construction de canaux selon la revendication 2, caractérisé en ce que le déplacement en largeur du tube laser (4) s'effectue d'une manière continue par l'intermédiaire d'un dispositif de commande à excentrique (16) et que le déplacement en hauteur du tube laser (4) s'effectue d'une manière continue par l'intermédiaire d'un autre dispositif de commande à excentrique (13).

4. Laser pour la construction de canaux selon la revendication 3, caractérisé en ce que le dispositif comporte, dans la zone du point d'action d'un excentrique (14, 15, 17), un ressort spirale (18) qui est enroulé autour du tube laser (4) et dont les extrémités libres sont fixées à la plaque de montage (2).

5. Laser pour la construction de canaux selon la revendication 1, caractérisé en ce que le dispositif d'affichage de la pente comporte au moins un compteur mécanique (8) qui est relié par l'intermédiaire d'une liaison rigide (10, 11) à un dispositif d'entraînement à broche (12) de l'inclinomètre (9).

6. Laser pour la construction de canaux selon la revendication 5, caractérisé en ce que l'inclinomètre est un niveau d'eau (9) susceptible d'être exploré électroniquement.

## Claims

1. Sighting laser, having a laser tube (4) arranged in a substantially tubular outer housing (1), the laser beam being adjustable both horizontally (directional adjustment) and vertically (gradient adjustment) by way of a remote control and the gradient of the laser beam being adjustable by way of a gradiometer (9), the sighting laser being kept horizontal by means of an electronic self-levelling system while maintaining the gradient of the laser beam that has been set, characterised in that in the axial direction of the laser tube (4) a mounting plate (2) is provided which extends over the length of the housing (1), is arranged in the central longitudinal plane of the housing (1) constructed substantially as a hollow cylinder, and carries the actual laser arrangement (3), that the mounting plate (2) substantially forms the upper closure of a trough-shaped housing part (19) in which the current supply for the laser (3, 4) and the remote control, especially in the form of one or more rechargeable batteries (20), is arranged, and that the remote control is a cordless infrared remote control.

2. Sighting laser according to Claim 1, characterised in that the trough-shaped housing part (19) forms with the mounting plate (2) carrying the laser arrangement (3) a structural unit which can be pushed in an interlocking manner into the substantially tubular outer housing (1).

3. Sighting laser according to Claim 2, characterised in that the lateral adjustment of the laser tube (4) is carried out continuously by way of an eccentric drive (16) and the height adjustment of the laser tube (4) is carried out continuously by way of a further eccentric drive (13).

4. Sighting laser according to Claim 3, characterised in that in the region of the point of engagement of an eccentric (14, 15; 17) a coiled spring (18) is placed over the laser tube (4), the free ends thereof being attached to the mounting plate (2).

5. Sighting laser according to Claim 1, characterised in that as gradient indicating means at least one mechanical counter (8) is provided which is connected by way of a rigid connection (10, 11) to a spindle drive (12) of the gradiometer (9).

6. Sighting laser according to Claim 5, characterised in that the gradiometer is an electronically scannable bubble level (9).

FIG.1

0 141 870

FIG.2